# EUROPÄISCHE PATENTANMELDUNG

(11) **EP 4 290 118 A1**
(43) Veröffentlichungstag der Anmeldung: **13.12.2023**
(21) Anmeldenummer: 23175925.9
(22) Anmeldetag: 30.05.2023
(51) Int. Cl.: F16P 3/14

(54) **ÜBERWACHUNGSEINRICHTUNG**

(30) Priorität: 07.06.2022 DE 202022103201 U
(71) Anmelder: Leuze electronic GmbH + Co. KG, 73277 Owen/Teck (DE)
(72) Erfinder: Rauscher, Thorsten, 81379 München (DE); Brunner, Rolf, 82223 Eichenau (DE)
(74) Vertreter: Ruckh, Rainer Gerhard

(57) **Zusammenfassung**

Die Erfindung betrifft eine Überwachungseinrichtung (1) mit einem eine Schutzfeldüberwachung durchführenden Sicherheitssensor, wobei abhängig von der Detektion eines Objekts in einem Schutzfeld (9) eine Sicherheitsfunktion generiert wird. Die Überwachungseinrichtung (1) weist weiterhin wenigstens einen Überwachungssensor (5) auf, der als LIDAR-Sensor ausgebildet ist und mittels dessen dreidimensionale Objektstrukturen innerhalb eines dreidimensionalen Raumbereichs erfassbar sind, und mit welchem sicherheitsrelevante Funktionen realisiert sind.

## Beschreibung

Die Erfindung betrifft eine Überwachungseinrichtung.

Derartige Überwachungseinrichtungen können zur Sicherung von Gefahrenbereichen an Anlagen vorgesehen sein, in welchem von der Anlage gefahrbringende Bewegungen ausgeführt werden.

Insbesondere kann ein Zugang zu einer Anlage abgesichert werden. Der Zugang zur Anlage kann durch ein Förderband oder dergleichen realisiert sein, über welches Transportgüter der Anlage zugeführt werden.

Die Überwachungseinrichtung weist wenigstens einen Sicherheitssensor auf. Mit dem Sicherheitssensor kann der Zugang zur Anlage überwacht werden. Dabei wird mit dem Sicherheitssensor ein Schutzfeld überwacht, das sich über den gesamten Zugangsbereich erstreckt. Der Sicherheitssensor kann insbesondere in Form eines Lichvorhangs ausgebildet sein.

Wird mit dem Sicherheitssensor ein Objekt, insbesondere eine Person, im Schutzfeld erkannt, wird eine Sicherheitsfunktion ausgelöst, die die Anlage in einen sicheren Zustand versetzt, so dass von dieser keine Gefahren mehr ausgehen können. Insbesondere wird die Anlage stillgesetzt.

Zur Durchführung von Arbeitsvorgängen mittels der Anlage müssen dieser Transportgüter zugeführt werden. Bei Passieren des Zugangs würde eine durch den Sicherheitssensor ausgelöste Sicherheitsfunktion bei Detektion des Transportguts im Schutzfeld zu einem unnötigen Stillstand der Anlage führen.

Daher sind bei bekannten Überwachungseinrichtungen Mutingsensoren vorgesehen, die dem Sicherheitssensor in Transportrichtung des Transportguts vorgeordnet sind. Typischerweise sind die Mutingsensoren von Lichtschrankenanordnungen gebildet. Anhand charakteristischer Folgen von Strahlunterbrechungen von Lichtschranken dieser Lichtschrankenanordnungen können Transportgüter von Personen oder anderen sicherheitskritischen Objekten unterschieden werden.

Wird mit den Mutingsensoren das Transportgut erkannt, wird der Sicherheitssensor überbrückt, das heißt gemutet, so dass während eines Mutingbetriebs ein Eindringen eines Objekts in das Schutzfeld des Sicherheitssensors nicht zur Auslösung der Sicherheitsfunktion führt. Damit kann das Transportgut den Sicherheitssensor passieren, ohne dass die Sicherheitsfunktion ausgelöst und die Anlage stillgesetzt wird.

Nachdem das Transportgut den Sicherheitssensor passiert hat, wird der Mutingbetrieb beendet und der Sicherheitssensor übernimmt wieder eine Überwachungsfunktion.

Ein Problem bei einem derartigen Muting ist, dass der gesamte Sicherheitssensor überbrückt wird und damit überhaupt keine Überwachungsfunktion mehr gegeben ist. Dies kann insbesondere dann zu Gefahrensituationen führen, wenn sich das Transportgut nicht über die gesamte Breite des Zugangs erstreckt. Dann kann eine Person neben dem Transportgut stehend den Zugang passieren und unbemerkt in den Gefahrenbereich der Anlage gelangen. Dies führt zu unkontrollierten Gefahrensituationen.

Zudem ist nachteilig, dass mit den Mutingsensoren das Transportgut nur unvollständig erfasst werden kann, was zu einer fehlerhaften Aktivierung des Mutingbetriebs führen kann.

Der Erfindung liegt die Aufgabe zugrunde, eine Überwachungseinrichtung mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem eine Schutzfeldüberwachung durchführenden Sicherheitssensor, wobei abhängig von der Detektion eines Objekts in einem Schutzfeld eine Sicherheitsfunktion generiert wird. Die Überwachungseinrichtung weist weiterhin wenigstens einen Überwachungssensor auf, der als LIDAR-Sensor ausgebildet ist und mittels dessen dreidimensionale Objektstrukturen innerhalb eines dreidimensionalen Raumbereichs erfassbar sind und mit welchem sicherheitsrelevante Funktionen realisiert sind.

Die erfindungsgemäße Überwachungseinrichtung weist einen Sicherheitssensor auf, mit dem abhängig von der Detektion eines Objekts in einem Schutzfeld eine Sicherheitsfunktion generiert wird.

Der Sicherheitssensor und damit die Überwachungseinrichtung wird im Bereich der Sicherheitstechnik eingesetzt. Besonders vorteilhaft wird mit der Überwachungseinrichtung der Betrieb einer Anlage gesichert. Dabei umfasst der Begriff Anlage auch einzelne Maschinen oder auch mobile Systeme. Von der Anlage können generell Gefahren für Personen ausgehen, insbesondere innerhalb eines Gefahrenbereichs.

Der Gefahrenbereich wird mit dem Sicherheitssensor überwacht. Insbesondere wird mit der vom Sicherheitssensor durchgeführten Schutzfeldüberwachung der Zugang zum Gefahrenbereich überwacht.

Vorteilhaft weist die Überwachungseinrichtung eine Steuer- und Auswerteeinheit auf, in der die Sicherheitsfunktion generiert wird.

Dabei kann die Steuer- und Auswerteeinheit im Sicherheitssensor integriert sein oder eine externe Einheit bilden.

Die Steuer- und Auswerteeinheit generiert insbesondere abhängig von Sensorsignalen des Sicherheitssensors ein binäres Schaltsignal, dessen Schaltzustände angeben, ob ein Objekt im Schutzfeld vorhanden ist oder nicht.

Das Schaltsignal wird an eine Sicherheitssteuerung ausgegeben, die die Anlage steuert.

Dabei wird als Sicherheitsfunktion die Anlage abgeschaltet, wenn mit dem Sicherheitssensor ein Objekt im Schutzfeld detektiert wird.

Erfindungsgemäß weist die Überwachungseinrichtung wenigstens einen Überwachungssensor in Form eines LIDAR-Sensors auf, der zur Überwachung eines dreidimensionalen Raumbereichs ausgebildet ist. Der LIDAR-Sensor bildet einen optischen Sensor in Form eines 3D-Scanners, d.h. die von einem Sender des LIDAR-Sensors emittierten Lichtstrahlen werden mit einer Ablenkeinheit in einem Raumbereich abgelenkt. Anhand der Empfangssignale des Empfängers des LIDAR-Sensors werden Distanzmessungen durchgeführt. Mit dem Überwachungssensor können dreidimensionale Objektstrukturen innerhalb eines dreidimensionalen Raumbereichs erfasst werden. Mit diesem Überwachungssensor werden erfindungsgemäß sicherheitsrelevante Funktonen realisiert, die über eine Generierung der Sicherheitsfunktion hinausgehen. Dadurch wird die Funktionalität der Überwachungseinrichtung erhöht.

Zur Realisierung von sicherheitsrelevanten Funktionen werden mit dem Überwachungssensor Distanzmessungen durchgeführt und Objekte dreidimensional erfasst, wodurch detaillierte und genaue Informationen über die Objekte zur Verfügung stehen.

Besonders vorteilhaft generiert der Überwachungssensor sicherheitsrelevante Funktionen repräsentierende Ausgangssignale in der Steuer- und Auswerteeinheit, oder gibt diese an die Steuer- und Auswerteeinheit aus.

Dabei werden insbesondere die Ausgangssignale in einer Auswerteeinheit des Überwachungssensors generiert, die auch die Steuer- und Auswerteeinheit bilden kann.

Die Ausganssignale des Überwachungssensors können in der Steuer- und Auswerteeinheit zur Erweiterung der sicherheitstechnischen Funktionen der Überwachungseinrichtung genutzt werden. Auch ist es möglich, dass mit den Ausgangssignalen des Überwachungssensors Art oder Umfang der Sicherheitsfunktion geändert werden kann, um so auf applikationsspezifische Änderungen bei der Überwachung der Anlage reagieren zu können.

Gemäß einer ersten Variante der Erfindung bildet der Überwachungssensor den Sicherheitssensor, mit dem die Schutzfeldüberwachung durchgeführt wird.

Die Überwachungseinrichtung weist damit einen besonders kompakten Aufbau mit wenig Einzelkomponenten auf, da der Überwachungssensor die Funktion des Sicherheitssensors mit übernimmt.

Die Schutzfeldüberwachung mittels des Überwachungssensors erfolgt innerhalb wenigstens eines Schutzfelds, das innerhalb des vom Überwachungssensor erfassten dreidimensionalen Raumbereich liegt.

Das Schutzfeld kann virtuell vorgegeben werden und frei konfiguriert werden, d.h. das Schutzfeld kann ohne mechanische Restriktionen, die bei Einsatz eines separaten Sicherheitssensors gegeben wären, frei gewählt werden, wodurch eine hohe Flexibilität der Überwachungseinrichtung erzielt wird.

Dabei kann das Schutzfeld in verschiedenen Dimensionen und mit nahezu beliebigen Geometrien vorgegeben werden.

Insbesondere ist das Schutzfeld linienförmig ausgebildet oder bildet einen zwei- oder dreidimensionalen Bereich aus.

Gemäß einer zweiten Variante bilden der Sicherheitssensor und der Überwachungssensor separate Einheiten.

Beispielsweise ist der Sicherheitssensor ein Lichtvorhang, ein Flächendistanzsensor oder ein Kamerasensor. Generell wird der separate Sicherheitssensor in oder am Gefahrenbereich der Anlage positioniert, um so die Anlage absichern zu können.

Da der Sicherheitssensor die Sicherheitsfunktion generiert, muss bei dieser Variante prinzipiell nur der Sicherheitssensor, nicht aber der Überwachungssensor, einen fehlersicheren Aufbau aufweisen, was die Konstruktion des Überwachungssensors vereinfacht.

Bei beiden Varianten kann mit dem Überwachungssensor das Umfeld des Schutzfelds überwacht werden, wobei insbesondere mit dem Überwachungssensor Objekte, die sich dem Schutzfeld nähern oder von diesem entfernen, erfasst werden können. Damit können Gefahrensituationen bereits erkannt werden, bevor ein Objekt in das Schutzfeld eindringt. Dies ermöglicht eine rechtzeitige Einleitung von Präventivmaßnahmen, um Gefahrensituationen zu vermeiden.

Besonders vorteilhaft wird hierzu mit dem Überwachungssensor ein dem Schutzfeld vorgelagerten Warnbereich überwacht.

Dabei kann das Schutzfeld zumindest teilweise innerhalb des Warnbereichs liegen.

Vorteilhaft ist der Warnbereich konfigurierbar, d.h. ein Benutzer kann den Warnbereich über eine geeignete Eingabeeinheit vorgeben und so applikationsspezifische Anforderungen anpassen. Dabei ist besonders vorteilhaft, dass der Warnbereich ohne mechanische Restriktionen vorgegeben werden kann.

Gemäß einer besonders vorteilhaften Ausführungsform der Erfindung wird abhängig von Sensorsignalen des Überwachungssensors eine Klassifikation von im Warnbereich vorhandenen Objekten durchgeführt.

Insbesondere werden mit der Klassifikation sicherheitskritische Objekte von nicht sicherheitskritischen Objekten unterschieden.

Sicherheitskritische Objekte sind Objekte, insbesondere Personen, deren Eindringen in den Gefahrenbereich der überwachten Anlage zu einer Gefahrensituation führen können. Nicht sicherheitskritische Objekte, wie z. B. Transportgüter, die Material für mit der Anlage durchzuführende Arbeitsvorgänge umfassen, führen nicht zu Gefahrensituationen, wenn sie in den Gefahrenbereich transportiert werden.

Dabei werden zweckmäßig nur im Warnbereich vorhandene Objekte klassifiziert, d. h. außerhalb des Warnbereichs angeordnete Objekte werden nicht betrachtet.

Gemäß einer vorteilhaften Ausführungsform detektiert der Überwachungssensor einen Boden als Referenzfläche, wobei vom Boden stammende Sensorsignale des Überwachungssensors als Referenzsignale eingelernt werden.

Der Überwachungssensor ist dann in Abstand oberhalb des Bodens, insbesondere des Fußbodens eines Fabrikgebäudes so montiert, dass die Detektionsrichtung des Überwachungssensors in Richtung des Bodens ausgerichtet ist.

Der Boden, d. h. die vom Überwachungssensor erfasste Szene, wird in einem Einlernvorgang im Überwachungssensor eingelernt und in dessen Auswerteeinheit abgespeichert. Während des Einlernvorgangs sind keine Objekte im Raumbereich vorhanden. Zu detektierende Objekte werden dann durch Vergleich der aktuellen Sensorsignale mit eingelernten Referenzwerten verglichen. Durch den Referenzvergleich können Objekte besonders sicher erfasst werden. Dabei ist besonders vorteilhaft, dass mit dem Überwachungssensor bedingt durch unterschiedliche Strahlwinkel von Sendestrahlen unterschiedliche Entfernungswerte für den Boden erhalten werden. Damit wird ohne weitere Maßnahmen eine Dynamisierung der Referenzwerte erhalten, was die Nachweissicherheit des Überwachungssensors weiter erhöht, da somit statische Messfehler aufgedeckt werden.

Weiter ist es möglich, dass mittels des Überwachungssensors Objekte dadurch erfasst werden, dass Sensorsignale des Überwachungssensors mit abgespeicherten, vorgegebenen Mustern verglichen werden.

Dies ermöglicht eine besonders einfache und effiziente Unterscheidung unterschiedlicher Objekte. Dieser Vorteil kann insbesondere dadurch erhalten bzw. gesteigert werden, dass einfache Muster, wie Quader, Zylinder und dergleichen, vorgegeben werden, anhand deren Objekte erkannt und voneinander unterschieden werden können.

Weiterhin vorteilhaft wird zur Objektklassifikation anhand von Sensorsignalen des Überwachungssensors die Form, Größe, Geschwindigkeit, Bewegungsrichtung und/oder das Bewegungsprofil eines Objekts ermittelt.

Anhand dieser Merkmale können Objekte besonders sicher klassifiziert und voneinander unterschieden werden.

Insbesondere kann anhand der Analyse eines Bewegungsprofils ein Transportgut von einer Person unterschieden werden. Während ein Transportgut sich gleichförmig in eine Richtung bewegt, bewegen sich bei einer gehenden Person Arme und Beine in unterschiedlichen Richtungen.

Vorteilhaft wird zur Objektklassifikation eine zeitaufgelöste Auswertung von Sensorsignalen des Überwachungssensors durchgeführt.

Damit ist eine Objektverfolgung von sich bewegenden Objekten möglich.

Weiter vorteilhaft sind mittels des Überwachungssensors mehrere Objekte innerhalb des Warnbereichs erfassbar und einzeln klassifizierbar.

Dadurch, dass mit dem Überwachungssensor ein dreidimensionaler Raumbereich erfasst wird, können mehrere dort vorhandene Objekte parallel erfasst und verfolgt werden.

Gemäß einer vorteilhaften Ausgestaltung weist die Überwachungseinrichtung mehrere, in unterschiedlichen Detektionsrichtungen angeordnete Überwachungssensoren auf.

Dadurch, dass Objekte mit dem Überwachungssensor aus unterschiedlichen Richtungen erfasst werden, werden Abschattungsprobleme bei der Objektdetektion vermieden.

Gemäß einer besonders vorteilhaften Ausführungsform der Erfindung wird mit dem Überwachungssensor als sicherheitsrelevante Funktion eine Mutingfunktion realisiert, mittels derer die Sicherheitsfunktion des Sicherheitssensor überbrückt wird.

Dabei ist bei aktivierter Mutingfunktion das Schutzfeld in seiner Gesamtheit oder in vorgegebenen Bereichen überbrückt.

Dabei sind das Schutzfeld oder Bereiche hiervon derart überbrückt, dass ein oder mehrere zulässige Objekte das Schutzfeld passieren können, ohne dass die Sicherheitsfunktion ausgelöst wird.

Während der Überbrückung des Sicherheitssensors können Objekte, von denen keine Gefahren ausgehen, wie z. B. Transportgüter, durch das Schutzfeld einer zu überwachenden Anlage zugeführt werden, ohne dass dadurch die Sicherheitsfunktion ausgelöst und die Anlage stillgesetzt wird. Dadurch werden unnötige Stillstandszeiten der Anlage vermieden.

Vorteilhaft ist durch die Mutingfunktion die Sicherheitsfunktion temporär überbrückt.

Damit ist zweckmäßig die Dauer der Überbrückung an die Zeitdauer, die ein nicht Gefahr bringendes Objekt zum Passieren des Schutzfelds benötigt, angepasst.

Ist der Sicherheitssensor vom Überwachungssensor gebildet, kann das Schutzfeld als virtuelle Barriere frei konfiguriert werden. Des Weiteren können auch die gemuteten Bereiche des Schutzfelds frei vergeben werden, im Gegensatz zu Sicherheitssensoren wie Lichtvorhängen, wo die überbrückbaren Bereiche von einzelnen, sich über die gesamte Breite des Schutzfelds erstreckenden Strahlachsen, gebildet sind. Bei einem Lichtvorhang ist generell eine Reihenanordnung von Paaren von Lichtstrahlen emittierenden Sendern und Lichtstrahlen empfangenden Empfängern vorgesehen, die die einzelnen Strahlachsen bilden.

Vorteilhaft wird die Mutingfunktion derart realisiert, dass das oder die zulässigen Objekte mittels des Überwachungssensors als nicht sicherheitskritisches Objekt im Warnbereich erfasst werden, bevor sie das Schutzfeld passieren.

Weiter vorteilhaft weist die Überwachungseinrichtung eine Steuerung auf, die ein Ankündigungssignal generiert das angibt, in welchem Bereich ein zulässiges Objekt das Schutzfeld unterbricht.

Zweckmäßig enthält das Ankündigungssignal die Zeit oder den Zeitraum, wann das zulässige Objekt das Schutzfeld passiert.

Die Steuerung kann eine Transporteinheit, wie z. B. ein Förderband steuern, mittels dessen Transportgüter der Anlage zugeführt werden. In der Steuerung ist bekannt, welche Transportgüter zu welchen Zeiten der Anlage zugeführt werden. Anhand dieser Informationen kann die Mutingfunktion gesteuert werden.

Weiterhin vorteilhaft wird mit dem Überwachungssensor ein das Schutzfeld passierendes zulässiges Objekt oder innerhalb des Schutzfelds stehendes zulässiges Objekt erfasst.

Damit kontrolliert der Überwachungssensor das zulässige Objekt, wenn es sich im Bereich des Schutzfelds befindet.

Damit kann insbesondere kontrolliert werden, ob sich das zulässige Objekt alleine durch das Schutzfeld bewegt, oder ob sich dort ein weiteres, nicht zulässiges Objekt, befindet.

Um Gefahrenzustände zu vermeiden wird bei Veränderung der Geometrie eines innerhalb des Schutzfelds stehenden zulässigen Objekts die Sicherheitsfunktion generiert.

Durch die Sicherheitsfunktion wird die zu überwachende Anlage stillgesetzt oder allgemein in einen nicht gefahrbringenden Zustand versetzt.

Gemäß einer weiteren vorteilhaften Ausgestaltung der Erfindung wird mit dem Überwachungssensor als sicherheitsrelevante Funktion eine Blanking-Funktion realisiert, wobei ein in einem Blanking-Bereich des Schutzfelds angeordnetes Blanking-Objekt nicht zur Auslösung der Sicherheitsfunktion führt.

Mit der Blanking-Funktion können innerhalb des Schutzfelds positionierte, insbesondere stationär angeordnete nicht gefahrbringende Gegenstände ausgeblendet werden, so dass diese nicht zur Auslösung der Sicherheitsfunktion führen. Beispiele für derartige Gegenstände sind stationär angeordnete Pfosten, Pfeiler und dergleichen.

Bewegen sich nicht gefahrbringende Objekte, wie Maschinenteile durch das Schutzfeld, können auch diese mit einem sogenannten dynamischen Blanking ausgeblendet werden.

Als Zusatzforderung kann bei einer Blanking-Funktion gefordert werden, dass bei aktivierter Blanking-Funktion bei nicht im Blanking-Bereich vorhandenen Blanking-Objekt die Sicherheitsfunktion ausgelöst wird.

Dies bedeutet, dass Voraussetzung für ein fehlerfreies Blanking ist, dass das Blanking-Objekt auch dauerhaft, d. h. ununterbrochen im Blanking-Bereich erkannt wird.

Vorteilhaft wird das Blanking-Objekt als nicht sicherheitskritisches Objekt mittels des Überwachungssensor erfasst.

Gemäß einer vorteilhaften Variante der Erfindung führt ein im Schutzfeld vorhandenes Objekt nicht zu einer Generierung der Sicherheitsfunktion, wenn dieses mit dem Überwachungssensor als unkritisch erkannt wird.

Dies stellt einen völlig anderen Ansatz als bei einem Muting oder auch Blanking dar.

Bei einem Muting wird das Schutzfeld komplett oder teilweise überbrückt, so dass dort vorhandene Objekte nicht zur Generierung der Sicherheitsfunktion führen, d.h. die Sicherheitsfunktions-Überwachung wird ausgesetzt.

Dies ist bei der vorliegenden Variante nicht der Fall, da stets das Schutzfeld komplett aktiviert bleibt und im gesamten Schutzfeld eine Objektüberwachung durchgeführt wird.

Der Grundgedanke bei dieser Erfindungsvariante besteht darin, dass mit dem Überwachungssensor ein im Schutzfeld vorhandenes Objekt, insbesondere anhand spezifischer Eigenschaften, insbesondere Geometrien oder Objektmerkmale, als unkritisch eingestuft werden kann. Ist dies der Fall, generiert der Überwachungssensor eine sicherheitsrelevante Funktion derart, dass dieses im Schutzfeld vorhandene Objekt nicht zur Generierung der Sicherheitsfunktion führt.

Gemäß einer vorteilhaften Ausführungsform wird ein im Schutzfeld stationär angeordnetes Objekt durch Erfassung mit dem Überwachungssensor in einem Einlernvorgang eingelernt. Das Objekt wird in einem auf den Einlernvorgang folgenden Arbeitsbetrieb vom Überwachungssensor erfasst und durch Vergleich von aktuell ermittelten Signalen des Überwachungssensors mit im Einlernvorgang ermittelten Signalen des Überwachungssensors als unkritisch erkannt.

Damit kann im Arbeitsbetrieb das unkritische Objekt im Schutzfeld besonders sicher erfasst werden.

Ein erstes Applikationsbeispiel ist dadurch gekennzeichnet, dass das Objekt während des Arbeitsbetriebs Vibrationsbewegungen durchführt, die mit dem Überwachungssensor als unkritische Bewegungen erkannt werden.

Ein derartiges unkritisches Objekt kann ein Schutzzaun sein, von welchem keine Gefahren für Personen ausgehen. Die Vibrationsbewegungen des Schutzzauns, die durch mechanische Erschütterungen verursacht sein können, weisen kleine Bewegungsamplituden auf, die die stationäre Anordnung des Schutzzauns unbeeinträchtigt lassen.

Ein zweites Applikationsbeispiel ist dadurch gekennzeichnet, dass das Objekt eine Rollenbahn mit einer Anordnung von drehbaren Rollen ist, wobei Drehbewegungen der Rollen als unkritische Bewegungen erkannt werden.

Die Rollenbahn ist ein stationär angeordnetes, nicht gefahrbringendes Objekt. Auch die Bewegungen der Rollen der Rollenbahn verursachen keine Gefahrensituationen. Diese werden mit dem Überwachungssensor erfasst und als unkritisch klassifiziert. Dadurch, dass mit dem Überwachungssensor nicht nur die stationäre Rollenbahn, sondern auch deren drehbare Rollen vom Überwachungssensor erfasst werden, wird dieses Objekt vom Überwachungssensor vollständig in seiner Gesamtheit erfasst.

Gemäß einer weiteren Ausführungsform wird ein im Schutzfeld vorhandenes Objekt als unkritisch eingestuft, wenn ein Teil des Objekts innerhalb des Schutzfelds mittels des Überwachungssensors als stationär erkannt wird.

Ein Beispiel für ein derartiges Objekt ist ein Roboter, der als stationäres Teil einen Sockel, Standfuß oder dergleichen aufweist, an welchem ein Roboterarm beweglich gelagert ist. Durch die Erfassung des stationären Teils mit einem Überwachungssensor wird der Roboter als unkritisches Objekt erkannt und von sicherheitskritischen Objekten, insbesondere Personen, sicher unterschieden.

Gemäß einer weiteren Ausführungsform wird ein im Schutzfeld vorhandenes Objekt mit dem Überwachungssensor erfasst und als unkritisch klassifiziert.

In diesem Fall erkennt der Überwachungssensor ein Objekt anhand seiner Geometrie, seines Bewegungsprofils und dergleichen und klassifiziert dies als unkritisch, indem er das Objekt einer bestimmten Objektklasse zuordnet. Eine derartige Objektklasse können z.B. AGV (automatic guided vehicles) sein, die sich durch das Schutzfeld bewegen.

Die Klassifikation der Objekte kann vorteilhaft mittels eines neuronalen Netzes erfolgen, die vorteilhaft in der Auswerteeinheit des Überwachungssensors integriert sein kann. Die Eingangsdaten für das neuronale Netz sind die Sensorsignale des Überwachungssensors. Als Ausgangsdaten des neuronalen Netzes wird eine Zuordnung eines Objekts zu einer Objektklasse zusammen mit einer Wahrscheinlichkeit für die Objektklassifikation ausgegeben. Das neuronale Netz wird durch die Methode des überwachten oder unüberwachten Lernens trainiert.

Die Erfindung wird im Folgenden anhand der Zeichnungen erläutert. Es zeigen:
- Figur 1:: Erstes Ausführungsbeispiel der erfindungsgemäßen Überwachungseinrichtung mit einem Überwachungssensor.
- Figur 2:: Anordnung gemäß Figur 1 mit einem zu mutenden Objekt.
- Figur 3:: Schutzfeld für die Überwachungseinrichtung gemäß Figur 1
a) ohne Muting.
b) mit Muting.
- Figur 4:: Erstes Beispiel einer Personenerkennung mit dem Überwachungssensor der Überwachungseinrichtung gemäß Figur 1.
- Figur 5:: Zweites Beispiel einer Personenerkennung mit dem Überwachungssensor der Überwachungseinrichtung gemäß Figur 1.
- Figur 6:: Zweites Ausführungsbeispiel der erfindungsgemäßen Überwachungseinrichtung mit einem Überwachungssensor und einem Sicherheitssensor in Form eines Lichtvorhangs.
- Figur 7:: Schematische Darstellung des Lichtvorhangs gemäß Figur 6.
- Figur 8:: Drittes Ausführungsbeispiel der erfindungsgemäßen Überwachungseinrichtung.
- Figur 9:: Viertes Ausführungsbeispiel der erfindungsgemäßen Überwachungseinrichtung.
- Figur 10:: Schutzfeld für die Überwachungseinrichtung gemäß Figur 1 mit einem Blanking-Bereich.
- Figur 11:: Fünftes Ausführungsbeispiel der erfindungsgemäßen Überwachungseinrichtung.
- Figur 12:: Sechstes Ausführungsbeispiel der erfindungsgemäßen Überwachungseinrichtung.
- Figur 13:: Siebtes Ausführungsbeispiel der erfindungsgemäßen Überwachungseinrichtung.
- Figur 14:: Achtes Ausführungsbeispiel der erfindungsgemäßen Überwachungseinrichtung.

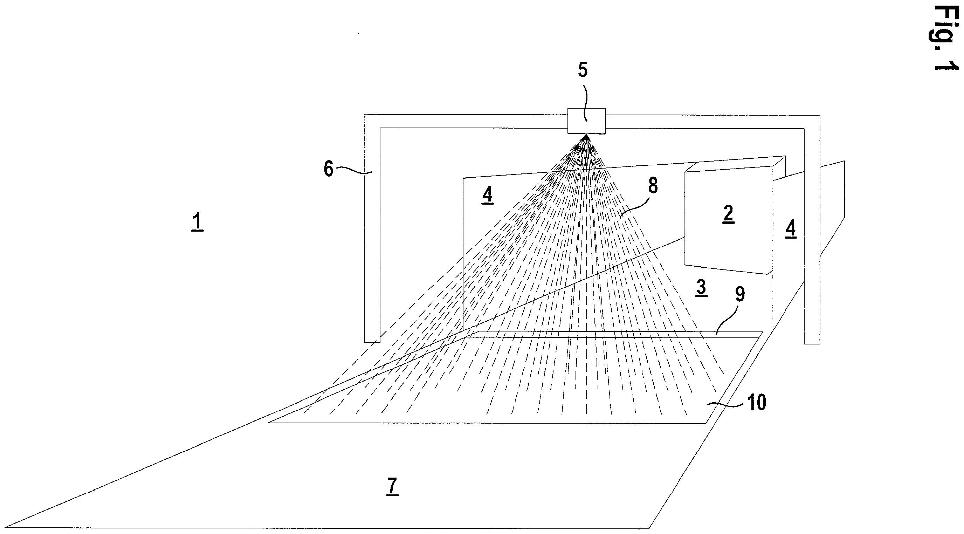

Figur 1 zeigt ein erstes Ausführungsbeispiel der erfindungsgemäßen Überwachungseinrichtung 1. Die Überwachungseinrichtung 1 dient zur Absicherung einer Anlage 2 mit einem Gefahrenbereich 3. Der Gefahrenbereich 3 ist seitlich durch Umzäunungen 4 geschützt. Der Zugang zum Gefahrenbereich 3 wird mit einem Überwachungssensor 5 abgesichert, der im vorliegenden Fall zugleich einen Sicherheitssensor zur Schutzfeldüberwachung bildet.

Der Überwachungssensor 5 ist als LIDAR-Sensor ausgebildet, d.h. als 3D-Scanner und distanzmessender Sensor ausgebildet, mit dem dreidimensionale Objektstrukturen innerhalb eines dreidimensionalen Raumbereichs erfasst werden können. Die Distanzmessungen erfolgen vorteilhaft nach einem Impuls-Laufzeit-Verfahren.

Wie Figur 1 zeigt, ist der Überwachungssensor 5 an der Oberseite eines Rahmens 6 befestigt, so dass dessen Detektionsrichtung gegen einen Boden 7 gerichtet ist.

Dabei zeigt Figur 1 die vom Überwachungssensor 5 emittierten Sendelichtstrahlen 8, die in Richtung des Bodens 7 geführt sind. In einem Einlernvorgang wird der Boden 7 ohne Objekte als Referenzfläche detektiert. Die dabei ermittelten Referenzsignale werden in einer Auswerteeinheit des Überwachungssensors 5 abgespeichert. Zur nachfolgenden Objektdetektion werden aktuelle Sensorsignale mit den Referenzsignalen verglichen.

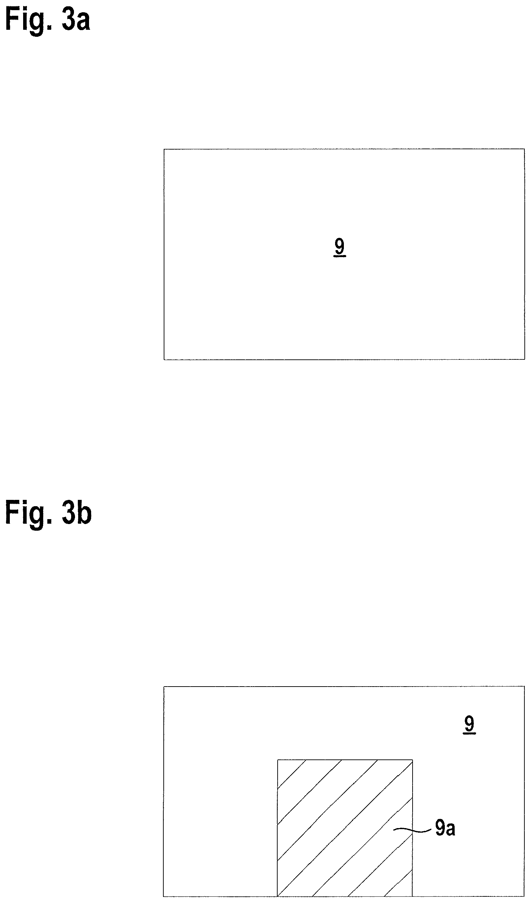

Mit dem Überwachungssensor 5 wird ein Schutzfeld 9 und ein daran angrenzender Warnbereich 10 überwacht. Figur 1 zeigt die Projektionen des Schutzfelds 9 und des Warnbereichs 10 auf dem Boden 7. Das Schutzfeld 9 ist eine vertikale Fläche, die sich über die Breite des Zugangs zum Gefahrenbereich 3 erstreckt (Figuren 3a, 3b). Das Schutzfeld 9 kann frei innerhalb des Raumbereichs konfiguriert werden. Der Warnbereich 10 ist ein dreidimensionalen Bereich. Auch der Warnbereich 10 ist konfigurierbar.

Die Auswerteeinheit des Überwachungssensors 5 bildet im vorliegenden Fall eine Steuer- und Auswerteeinheit, mit der eine Schutzfeldüberwachung durchgeführt wird. Die Steuer- und Auswerteeinheit weist generell einen fehlersicheren Aufbau auf. Dies wird insbesondere dadurch realisiert, dass diese zwei sich zyklisch gegenseitig überwachende Rechnereinheiten aufweist.

Die Steuer- und Auswerteeinheit generiert abhängig von Sensorsignalen des Sicherheitssensors ein binäres Schaltsignal, dessen Schaltzustände angeben, ob ein Objekt im Schutzfeld 9 vorhanden ist oder nicht.

Das Schaltsignal wird an eine die Anlage 2 steuernde Sicherheitssteuerung ausgegeben, wobei als Sicherheitsfunktion die Anlage 2 abgeschaltet wird, wenn mit dem Sicherheitssensor ein Objekt im Schutzfeld 9 detektiert wird.

Um unnötige Stillstände der Anlage 2 zu vermeiden, ist mit dem Überwachungssensor 5 als sicherheitsrelevante Funktion eine Mutingfunktion realisiert, mittels derer die Sicherheitsfunktion des Sicherheitssensors überbrückt ist.

Bei aktivierter Mutingfunktion ist das Schutzfeld 9 in seiner Gesamtheit oder in vorgegebenen Bereichen überbrückt. Das Schutzfeld 9 oder Bereiche hiervon sind derart überbrückt, dass ein oder mehrere zulässige Objekte das Schutzfeld 9 passieren können, ohne dass die Sicherheitsfunktion ausgelöst wird. Durch die Mutingfunktion ist insbesondere die Sicherheitsfunktion temporär überbrückt.

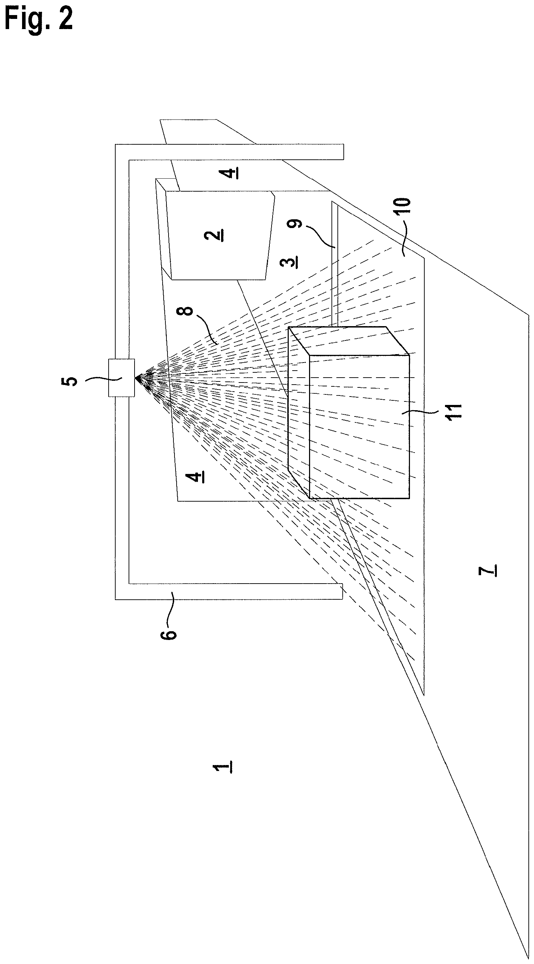

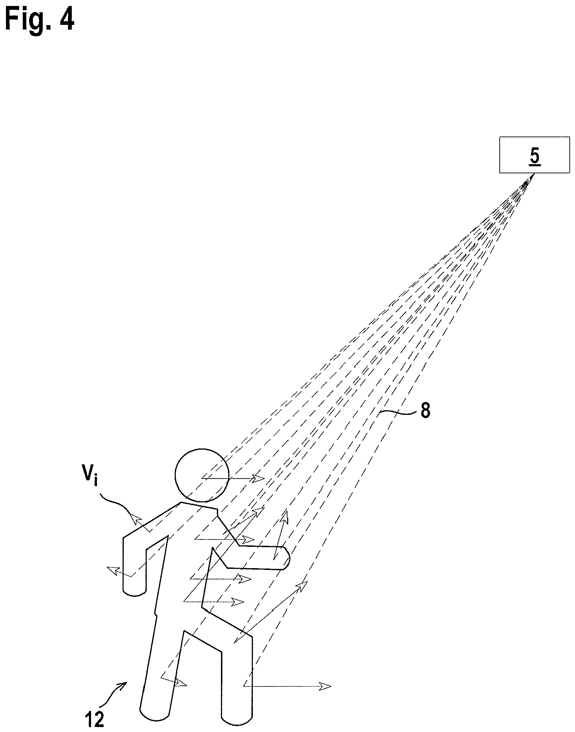

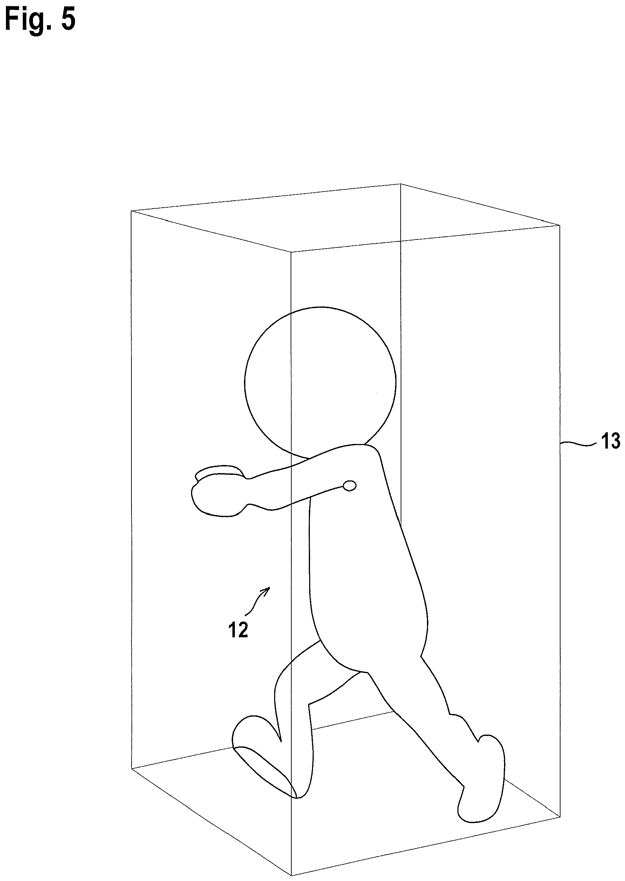

Das zulässige Objekt bildet ein nicht sicherheitskritisches Objekt, das z. B. in Form eines Transportguts 11 ausgebildet sein kann, wie Figur 2 zeigt. Demgegenüber bilden z. B. Personen 12 (Figuren 4 und 5) sicherheitskritische Objekte.

Mit dem Überwachungssensor 5 erfasste Objekte werden als nicht sicherheitskritische Objekte oder sicherheitskritische Objekte klassifiziert, wobei auch mehrere im Raumbereich bzw. Warnbereich 10 vorhandene Objekte gleichzeitig erkannt und klassifiziert werden können.

Vorteilhaft wird zur Objektklassifikation anhand von Sensorsignalen des Überwachungssensors 5 die Form, Größe, Geschwindigkeit, Bewegungsrichtung und/oder das Bewegungsprofil eines Objekts ermittelt.

Dabei kann zur Objektklassifikation eine zeitaufgelöste Auswertung von Sensorsignalen des Überwachungssensors 5 durchgeführt werden.

Figur 4 zeigt eine Objekterkennung einer Person 12 anhand deren Bewegungsprofil, veranschaulicht mit Bewegungsvektoren Vᵢ. Bei einer gehenden Person 12 bewegen sich Beine und Arme in unterschiedlichen Richtungen. Dadurch kann eine Person 12 von einem Transportgut 11, das sich völlig gleichförmig bewegt, unterschieden wird.

Weiterhin können mittels des Überwachungssensors 5 Objekte dadurch erfasst werden, dass Sensorsignale des Überwachungssensors 5 mit abgespeicherten, vorgegebenen Mustern verglichen werden.

Ein Beispiel hierfür zeigt Figur 5. Für eine gehende Person 12 kann eine Umhüllende 13 in Form eines stehenden langgestreckten Quaders definiert werden, der sich von der flachen Kontur des Transportguts 11 eindeutig unterscheidet.

Die Mutingfunktion wird vorteilhaft derart realisiert, dass das oder die zulässigen Objekte mittels des Überwachungssensors 5 als nicht sicherheitskritisches Objekt im Warnbereich 10 erfasst werden, bevor sie das Schutzfeld 9 passieren.

Daraus werden in der Steuer- und Auswerteeinheit Ausgangssignale generiert, wobei die Mutingfunktion dann aktiviert wird, wenn das zulässige Objekt das Schutzfeld 9 passiert, so dass der Sicherheitssensor keine Sicherheitsfunktion generiert.

Vorteilhaft weist die Überwachungseinrichtung 1 eine Steuerung auf, die ein Ankündigungssignal generiert das angibt, in welchem Bereich ein zulässiges Objekt das Schutzfeld 9 unterbricht.

Weiterhin enthält das Ankündigungssignal die Zeit oder den Zeitraum, wann das zulässige Objekt das Schutzfeld 9 passiert.

Die Steuerung kann ein Transportmittel steuern, die das Transportgut 11 dem Gefahrenbereich 3 zuführt. Das Transportmittel kann z. B. ein Förderband sein. In dieser Steuerung sind die Abmessungen der Transportgüter hinterlegt und zudem die Zeiträume, wann das jeweilige Transportgut 11 das Schutzfeld 9 passiert.

Die Figuren 3a, 3b zeigen das Schutzfeld 9 mit und ohne Muting. Figur 3a zeigt das Schutzfeld 9 ohne Muting. Dort ist das gesamte Schutzfeld 9 aktiv, so dass eine Sicherheitsfunktion ausgelöst wird, wenn an einer beliebigen Stelle des Schutzfelds 9 ein Objekteingriff registriert wird.

Figur 3b zeigt das Schutzfeld 9 bei aktivierter Mutingfunktion. Dort ist im Schutzfeld 9 ein Muting-Bereich 9a vorhanden, in innerhalb dessen die Sicherheitsfunktion überbrückt ist. Die Größe und Form des Muting-Bereichs 9a ist an das Transportgut 11 angepasst, so dass das Transportgut 11 das Schutzfeld 9 im Muting-Bereich 9a passieren kann ohne dass die Sicherheitsfunktion ausgelöst wird. Wird dagegen ein Objekteingriff im nicht gemuteten Bereich des Schutzfelds 9 registriert, wird die Sicherheitsfunktion ausgelöst.

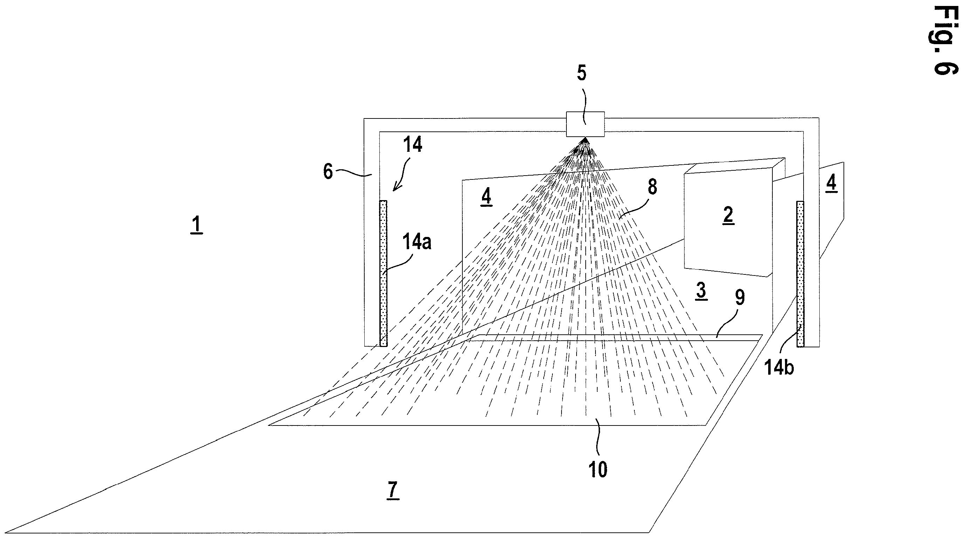

Figur 6 zeigt eine Variante der Ausführungsform gemäß Figur 1. Die Ausführungsform gemäß Figur 6 unterscheidet sich von der Ausführungsform gemäß Figur 1 dadurch, dass neben dem Überwachungssensor 5 ein separater Sicherheitssensor in Form eines Lichtvorhangs 14 vorgesehen ist. Der Lichtvorhang 14 weist eine Sendereinheit 14a und eine Empfängereinheit 14b auf, die gegenüberliegend am Rahmen 6 befestigt sind, sodass mit dem Lichtvorhang 14 ein in einer vertikalen Ebene orientiertes Schutzfeld 9 überwacht wird, das sich über die gesamte Breite des Zugangs erstreckt. Anstelle eines Lichtvorhangs 14 kann auch ein Sicherheitssensor in Form eines Flächendistanzsensors oder eines Kamerasensors vorgesehen sein.

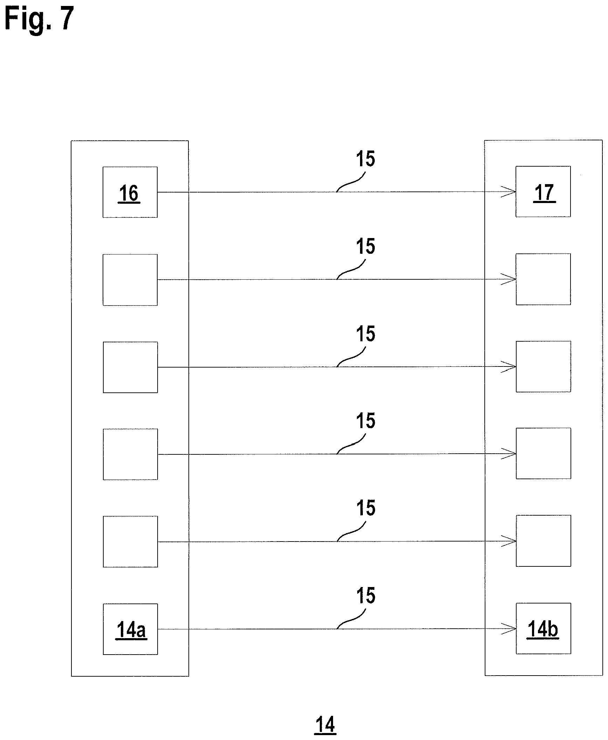

Der Aufbau des Lichtvorhangs 14 ist in Figur 7 schematisch dargestellt. In der Sendereinheit 14a ist eine Reihenanordnung von Lichtstrahlen 15 emittierenden Sendern 16 vorhanden. In der Empfängereinheit 14b ist eine Reihenanordnung von Lichtstrahlen 15 empfangenden Empfängern 17 vorhanden. Jeweils ein Sender 16 und ein zugeordneter Empfänger 17 bilden eine Strahlachse, wobei bei freiem Schutzfeld 9 die Lichtstrahlen 15 des Senders 16 einer Strahlachse ungehindert auf den Empfänger 17 dieser Strahlachse treffen. Bei einem Objekteingriff in dem durch die Strahlachsen gebildeten Schutzfeld 9 werden die Lichtstrahlen 15 wenigstens einer Strahlachse unterbrochen, wodurch ein Objekt im Schutzfeld 9 erkannt wird.

Die Funktionsweise der Überwachungseinrichtung 1 gemäß Figur 6 entspricht der Funktionsanzeige der Überwachungseinrichtung 1 gemäß Figur 1.

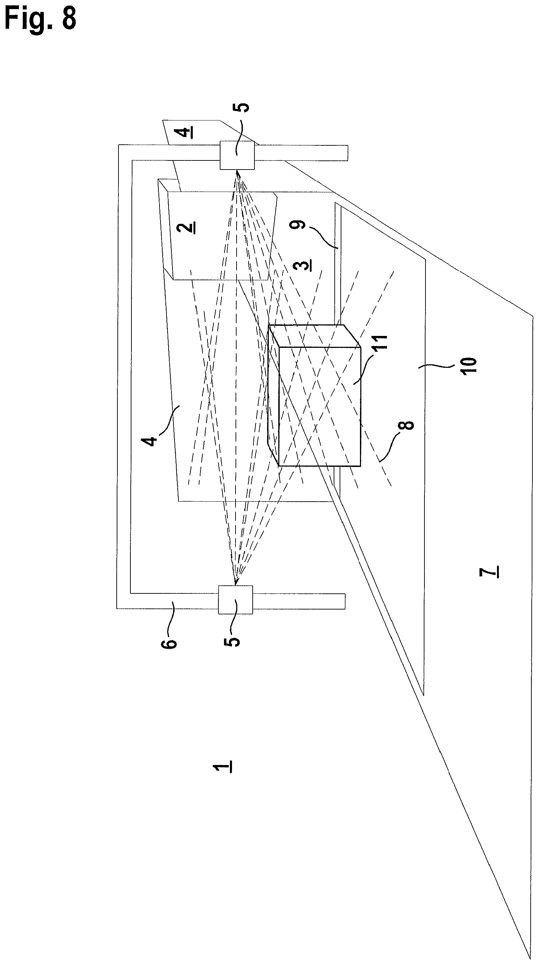

Figur 8 zeigt eine weitere Variante der Ausführungsform gemäß Figur 1. In diesem Fall sind zwei identische Überwachungssensoren 5 vorhanden, die seitlich am Rahmen 6 befestigt sind und den Warnbereich 10 und das Schutzfeld 9 aus verschiedenen Richtungen überwachen. Dadurch werden Abschattungsprobleme bei Objektdetektionen vermieden.

Die Funktionsweise der Überwachungseinrichtung 1 gemäß Figur 8 entspricht der Funktionsweise der Überwachungseinrichtung 1 gemäß Figur 1.

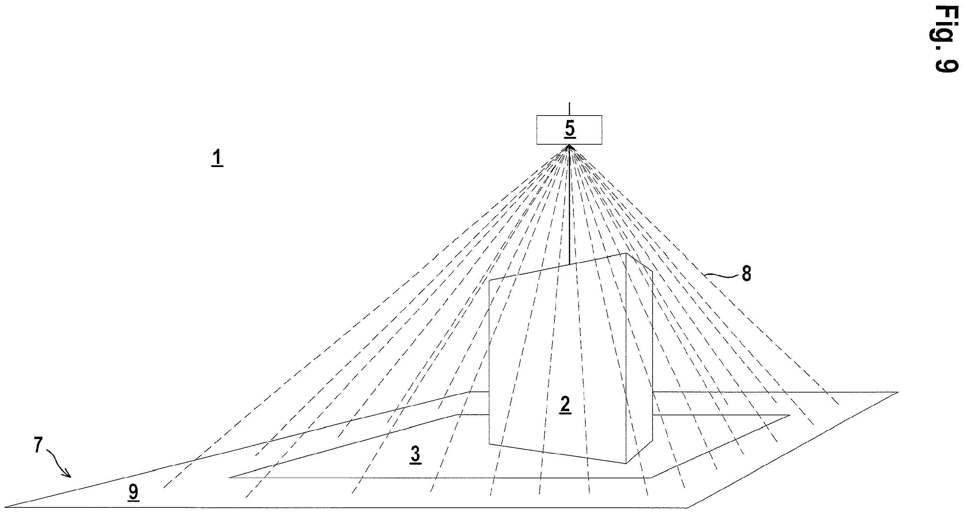

Figur 9 zeigt ein weiteres Ausführungsbeispiel der erfindungsgemäßen Überwachungseinrichtung 1. In diesem Fall ist der Überwachungssensor 5, der zugleich den Sicherheitssensor ausbildet, oberhalb der Anlage 2 montiert. Mit dem Überwachungssensor 5 wird die Anlage 2, ein Gefahrenbereich 3 an der Anlage 2 und ein Schutzfeld 9 überwacht.

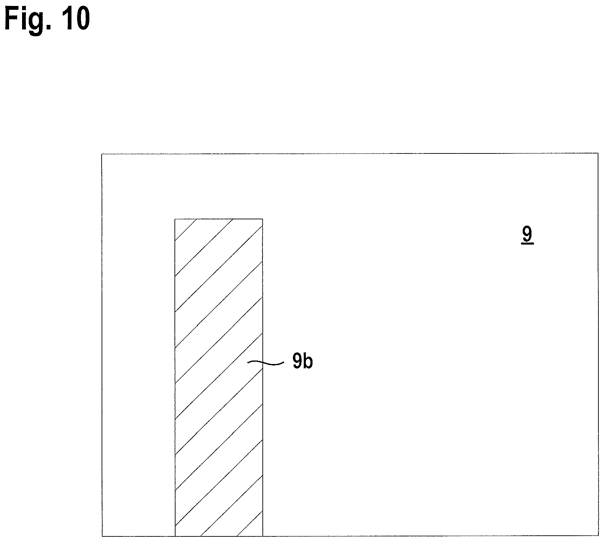

Figur 10 zeigt das Schutzfeld 9 für eine Variante der Überwachungseinrichtung 1 gemäß Figur 1 für den Fall, dass eine Blanking-Funktion aktiviert ist. Im Schutzfeld 9 ist ein Blanking-Bereich 9b vorgesehen, mit dem ein stationärer Gegenstand im Schutzfeld 9, wie z. B. ein Pfeiler ausgeblendet, d. h. geblankt wird, so dass dieser nicht zur Auslösung der Sicherheitsfunktion führt.

Gemäß einer weiteren Variante der Erfindung führt ein im Schutzfeld 9 vorhandenes Objekt nicht zu einer Generierung der Sicherheitsfunktion, wenn dieses mit dem Überwachungssensor 5 als unkritisch erkannt wird.

Anders als bei einem Muting wird ein Vorhandensein eines Objekts innerhalb des Schutzfelds 9 dann zugelassen und führt nicht zur Auslösung der Sicherheitsfunktion, wenn der Überwachungssensor 5 dieses Objekt als unkritisch erkennt.

Vorteilhaft wird ein im Schutzfeld 9 stationär angeordnetes Objekt durch Erfassung mit dem Überwachungssensor 5 in einem Einlernvorgang eingelernt. Das Objekt wird in einem auf den Einlernvorgang folgenden Arbeitsbetrieb vom Überwachungssensor 5 erfasst und durch Vergleich von aktuell ermittelten Signalen des Überwachungssensors 5 mit im Einlernvorgang ermittelten Signalen des Überwachungssensors 5 als unkritisch erkannt.

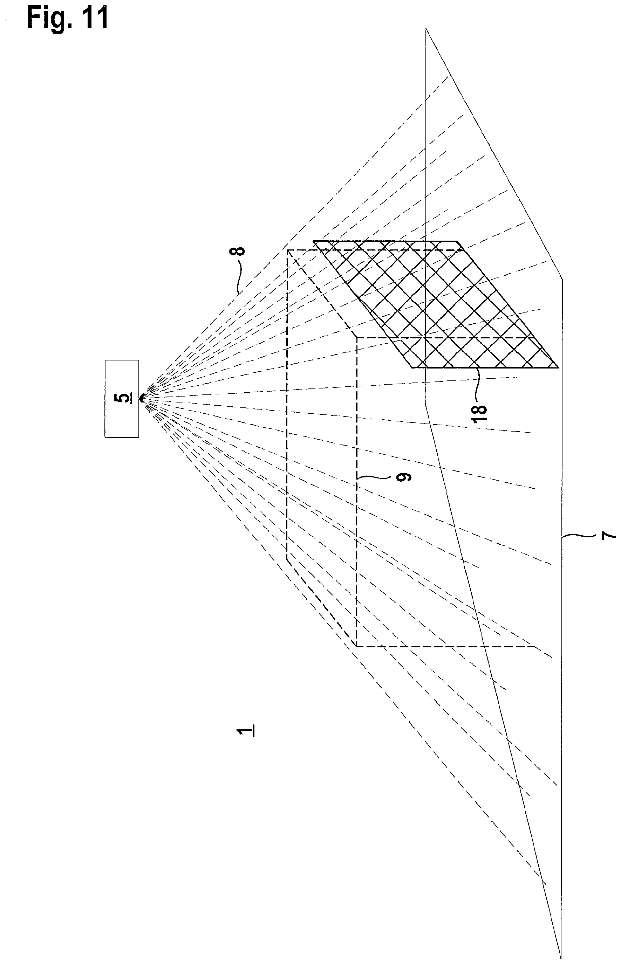

Die Figuren 11 bis 14 zeigen jeweils eine Ausführungsform der Überwachungseinrichtung 1 für diese Variante der Erfindung. Der Überwachungssensor 5 ist oberhalb des Bodens 7 einer Halle montiert, so dass die Sendelichtstrahlen 8 des Überwachungssensors 5 auf den Boden 7 gerichtet sind. Der Überwachungssensor 5 bildet auch den Sicherheitssensor.

In seiner Funktion als Sicherheitssensor überwacht der Überwachungssensor 5 ein Schutzfeld 9, das in den vorliegenden Fällen in Form eines dreidimensionalen Bereichs ausgebildet ist.

Generell kann die Ausführungsform der Figuren 11 bis 14 dahingehend abgewandelt sein, dass neben dem Überwachungssensor 5 ein separater Sicherheitssensor vorgesehen ist. Dieser Sicherheitssensor ist zur Überwachung eines dreidimensionalen Überwachungsbereichs ausgebildet. Insbesondere kann der Sicherheitssensor als Kamerasensor ausgebildet sein. Der Kamerasensor kann eine 3D-Kamera sein, die eine Matrixanordnung von Empfangselementen und eine Sendereinheit aufweist. Mit von der Sendereinheit emittierten Lichtstrahlen können Distanzmessungen nach einem Impuls-Laufzeit-Verfahren durchgeführt werden.

Bei dem Applikationsbeispiel gemäß Figur 11 ist ein Schutzzaun 18 als stationäres Objekt im Schutzfeld 9 angeordnet. Der Schutzzaun 18 wird in einem Einlernvorgang vom Überwachungssensor 5 erfasst und eingelernt. In einem auf den Einlernvorgang folgenden Arbeitsbetrieb wird vom Überwachungssensor 5 der Schutzzaun 18 als unkritisches Objekt im Schutzfeld 9 erkannt, das nicht zum Auslösen der Sicherheitsfunktion führt. Insbesondere wird der Schutzzaun 18 auch dann als unkritisches Objekt erkannt, wenn dieser infolge von Erschütterungen Vibrationsbewegungen ausführt.

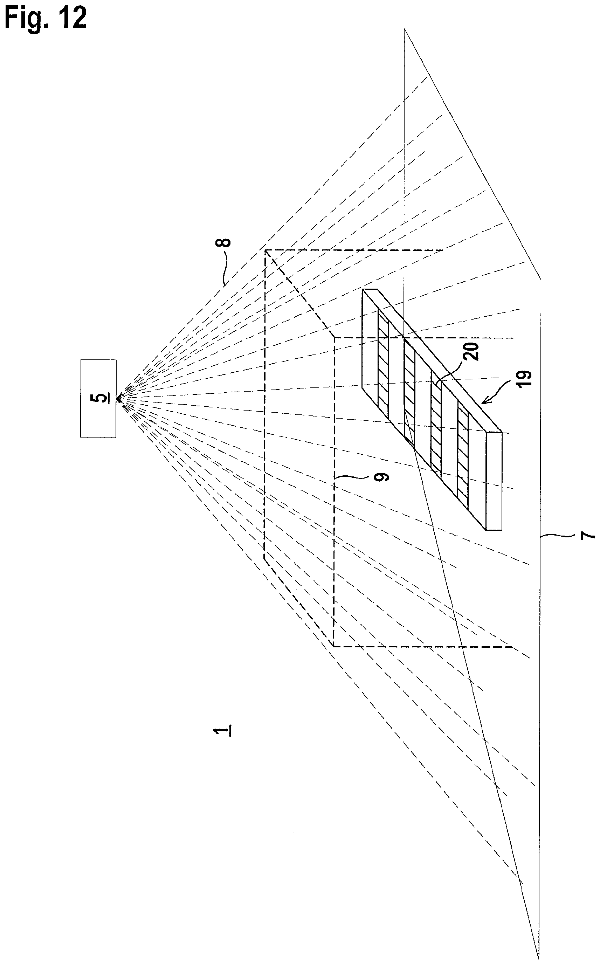

Bei dem Applikationsbeispiel gemäß Figur 12 ist als stationäres Objekt im Schutzfeld 9 eine Rollenbahn 19 vorgesehen. Die Rollenbahn 19 weist drehbare Rollen 20 auf, die für einen Materialtransport genutzt werden können. Auch die Rollenbahn 19 kann in einem Einlernvorgang eingelernt werden. Die Rollenbahn 19 wird vom Überwachungssensor 5 als unkritisches Objekt erkannt, und zwar auch dann, wenn die Rollen 20 Drehbewegungen ausführen.

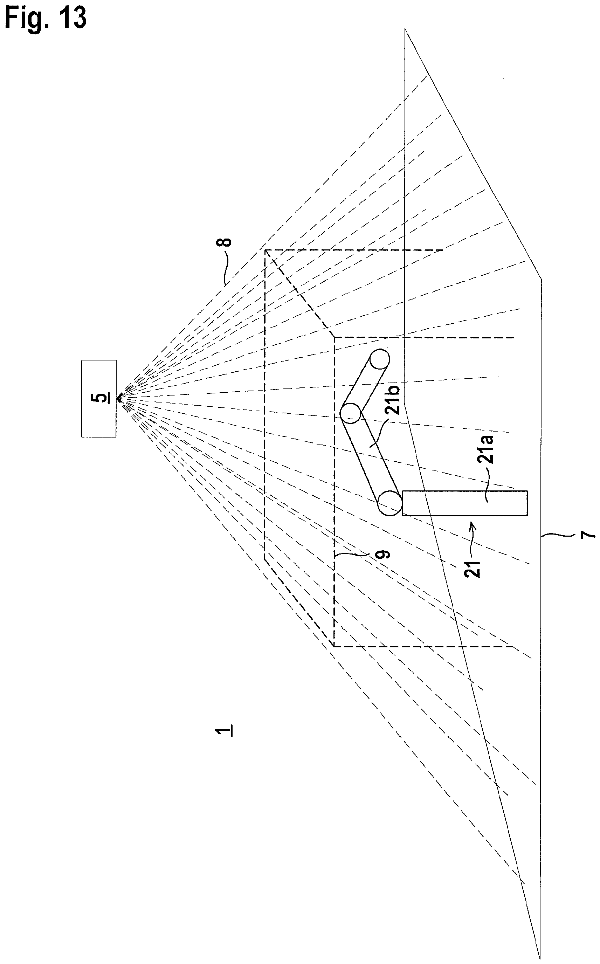

Bei dem Ausführungsbeispiel gemäß Figur 13 ist im Schutzfeld 9 ein Roboter 21 vorhanden. Der Roboter 21 weist als stationäres Teil einen Sockel 21a auf. Am Sockel 21a ist als bewegliches Teil des Roboters 21 ein Roboterarm 21b gelagert.

Allein durch die Erkennung des Sockels 21a als stationärem Teil wird der Roboter 21 vom Überwachungssensor 5 als unkritisches Objekt erkannt, und so von sicherheitskritischen Objekten, insbesondere Personen, unterschieden.

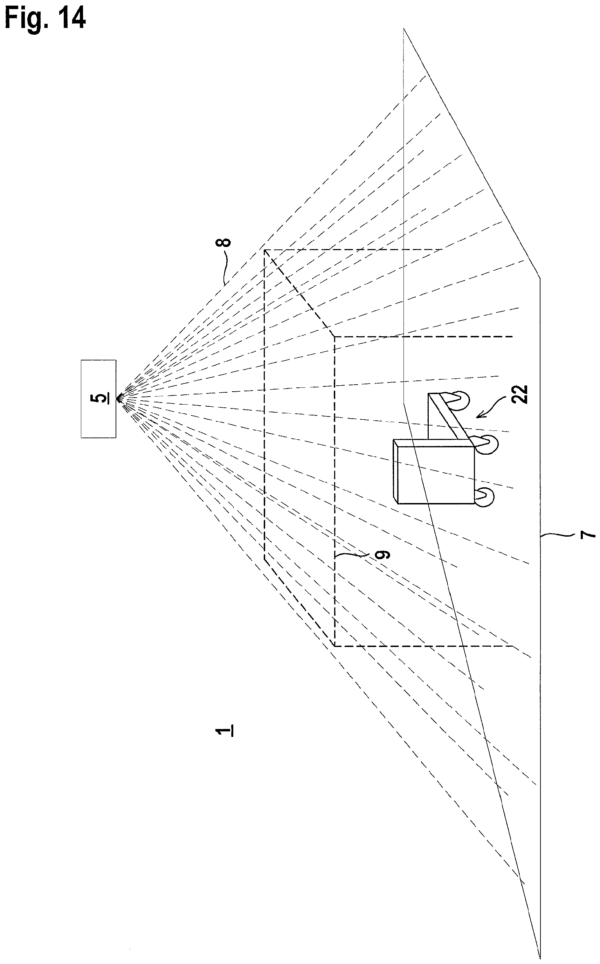

Bei dem Ausführungsbeispiel gemäß Figur 14 ist im Schutzfeld 9 ein AGV 22 (automatic guided vehicle) vorhanden. Dieses AGV 22 wird im Überwachungssensor 5 dadurch als unkritisch erkannt, indem dieses klassifiziert wird, d.h. einer Objektklasse von AGV zugeordnet wird. Die Klassifikation kann mittels eines neuronalen Netzes erfolgen, das vorteilhaft Bestandteil der Auswerteeinheit des Überwachungssensors 5 ist.

### Bezugszeichenliste

- (1): Überwachungseinrichtung
- (2): Anlage
- (3): Gefahrenbereich
- (4): Umzäunung
- (5): Überwachungssensor
- (6): Rahmen
- (7): Boden
- (8): Sendelichtstrahlen
- (9): Schutzfeld
- (9a): Muting-Bereich
- (9b): Blanking-Bereich
- (10): Warnbereich
- (11): Transportgut
- (12): Person
- (13): Umhüllende
- (14): Lichtvorhang
- (14a): Sendereinheit
- (14b): Empfängereinheit
- (15): Lichtstrahl
- (16): Sender
- (17): Empfänger
- (18): Schutzzaun
- (19): Rollenbahn
- (20): Rollen
- (21): Roboter
- (21a): Sockel
- (21b): Roboterarm
- (22): AGV

## Patentansprüche

1. Überwachungseinrichtung (1) mit einem eine Schutzfeldüberwachung durchführenden Sicherheitssensor, wobei abhängig von der Detektion eines Objekts in einem Schutzfeld (9) eine Sicherheitsfunktion generiert wird, **dadurch gekennzeichnet, dass** die Überwachungseinrichtung (1) wenigstens einen Überwachungssensor (5) aufweist, wobei der Überwachungssensor von einem LIDAR-Sensor gebildet ist, mittels dessen dreidimensionale Objektstrukturen innerhalb eines dreidimensionalen Raumbereichs erfassbar sind und mit welchem sicherheitsrelevante Funktionen realisiert sind.

2. Überwachungseinrichtung (1) nach Anspruch 1, **dadurch gekennzeichnet, dass** diese eine Steuer- und Auswerteeinheit aufweist, in der die Sicherheitsfunktion generiert wird.

3. Überwachungseinrichtung (1) nach Anspruch 2, **dadurch gekennzeichnet, dass** der Überwachungssensor (5) sicherheitsrelevante Funktionen repräsentierende Ausgangssignale in der Steuer- und Auswerteeinheit generiert oder an die Steuer- und Auswerteeinheit ausgibt.

4. Überwachungseinrichtung (1) nach einem der Ansprüche 1 bis 3, **dadurch gekennzeichnet, dass** anhand von Sensorsignalen des Überwachungssensors (5) die Form, Größe, Geschwindigkeit, Bewegungsrichtung und/oder das Bewegungsprofil eines Objekts ermittelt wird.

5. Überwachungseinrichtung (1) nach einem der Ansprüche 1 bis 4, **dadurch gekennzeichnet, dass** der Überwachungssensor (5) den Sicherheitssensor bildet, mit dem die Schutzfeldüberwachung durchgeführt wird.

6. Überwachungseinrichtung (1) nach einem der Ansprüche 1 bis 4, **dadurch gekennzeichnet, dass** der Sicherheitssensor und der Überwachungssensor (5) separate Einheiten bilden.

7. Überwachungseinrichtung (1) nach Anspruch 6, **dadurch gekennzeichnet, dass** der Sicherheitssensor ein Lichtvorhang (14) ist, oder ein Flächendistanzsensor oder ein Kamerasensor ist.

8. Überwachungseinrichtung (1) nach einem der Ansprüche 1 bis 7, **dadurch gekennzeichnet, dass** mit dem Überwachungssensor (5) als sicherheitsrelevante Funktion eine Mutingfunktion realisiert ist, mittels derer die Sicherheitsfunktion des Sicherheitssensors überbrückt ist, wobei bei aktivierter Mutingfunktion das Schutzfeld (9) in seiner Gesamtheit oder in vorgegebenen Bereichen überbrückt ist.

9. Überwachungseinrichtung (1) nach Anspruch 8, **dadurch gekennzeichnet, dass** durch die Mutingfunktion die Sicherheitsfunktion temporär überbrückt ist.

10. Überwachungseinrichtung (1) nach einem der Ansprüche 1 bis 9, **dadurch gekennzeichnet, dass** mit dem Überwachungssensor (5) als sicherheitsrelevante Funktion eine Blanking-Funktion realisiert ist, wobei ein in einem Blanking-Bereich (9b) des Schutzfelds (9) angeordnetes Blanking-Objekt nicht zur Auslösung der Sicherheitsfunktion führt.

11. Überwachungseinrichtung (1) nach einem der Ansprüche 1 bis 7, **dadurch gekennzeichnet, dass** ein im Schutzfeld (9) vorhandenes Objekt nicht zu einer Generierung der Sicherheitsfunktion führt, wenn dieses mit dem Überwachungssensor (5) als unkritisch erkannt wird.

12. Überwachungseinrichtung (1) nach Anspruch 11, **dadurch gekennzeichnet, dass** ein im Schutzfeld (9) stationär angeordnetes Objekt durch Erfassung mit dem Überwachungssensor (5) in einem Einlernvorgang eingelernt wird, und dass das Objekt in einem auf den Einlernvorgang folgenden Arbeitsbetrieb vom Überwachungssensor (5) erfasst wird und durch Vergleich von aktuell ermittelten Signalen des Überwachungssensors (5) mit im Einlernvorgang ermittelten Signalen des Überwachungssensors (5) als unkritisch erkannt wird.

13. Überwachungseinrichtung (1) nach Anspruch 12, **dadurch gekennzeichnet, dass** das Objekt während des Arbeitsbetriebs Vibrationsbewegungen durchführt, die mit dem Überwachungssensor (5) als unkritische Bewegungen erkannt werden.

14. Überwachungseinrichtung (1) nach Anspruch 12, **dadurch gekennzeichnet, dass** das Objekt eine Rollenbahn (19) mit einer Anordnung von drehbaren Rollen (20) ist, wobei Drehbewegungen der Rollen (20) als unkritische Bewegungen erkannt werden.

15. Überwachungseinrichtung (1) nach einem der Ansprüche 11 oder 12, **dadurch gekennzeichnet, dass** ein im Schutzfeld (9) vorhandenes Objekt als unkritisch eingestuft wird, wenn ein Teil des Objekts innerhalb des Schutzfelds (9) mittels des Überwachungssensors (5) als stationär erkannt wird.

16. Überwachungseinrichtung (1) nach einem der Ansprüche 11 oder 12, **dadurch gekennzeichnet, dass** ein im Schutzfeld (9) vorhandenes Objekt mit dem Überwachungssensor (5) erfasst und als unkritisch klassifiziert wird.
